(19) Europäisches Patentamt
European Patent Office
Office européen des brevets

(11) Veröffentlichungsnummer: **0 107 838**
**A2**

# (12) EUROPÄISCHE PATENTANMELDUNG

(21) Anmeldenummer: 83110322.1

(22) Anmeldetag: 17.10.83

(51) Int. Cl.³: C 08 G 18/10
C 09 D 3/72, D 06 N 3/14

(30) Priorität: 28.10.82 DE 3239900

(43) Veröffentlichungstag der Anmeldung: 09.05.84 Patentblatt 84/19

(84) Benannte Vertragsstaaten: AT BE CH DE FR GB IT LI NL SE

(71) Anmelder: BAYER AG
Konzernverwaltung RP Patentabteilung
D-5090 Leverkusen 1 Bayerwerk(DE)

(72) Erfinder: Thoma, Wilhelm, Dr.
Birkenweg 25
D-5090 Leverkusen 3(DE)

(72) Erfinder: Pisaric, Karl Heinz
Marderweg 86
D-5024 Pulheim(DE)

(72) Erfinder: Alberts, Heinrich, Dr.
Schulstrasse 1a
D-5068 Odenthal(DE)

## (54) Verlaufmittelhaltige Polyurethan-High-Solid-Reaktivbeschichtungssysteme und ihre Verwendung zur Reaktivbeschichtung.

(57) Gegenstand der Erfindung sind High-Solid-Polyurethan-Reaktivbeschichtungssysteme aus blockierten NCO-Prepolymeren, Polyaminen und gegebenenfalls Lösungsmitteln, welche eine bestimmte Verlaufmittelkombination aus 1 bis 10 Gew.-% Poly(meth)acrylsäureestern und gegebenenfalls weiteren Copolymeren und 0,1 bis 2 Gew.-% Silikonen, insbesondere Polydimethylsiloxanen und/oder Polyalkylenoxid-polydimethylsiloxan-Copolymeren und/oder 0,1 bis 4 Gew.-% Poly(meth)acrylsäure(hydroxy)-alkylester-Pfropfpolymeren auf Silikone, insbesondere hergestellt durch Pfropfung entsprechender Monomerer auf Gemische von Vinylreste enthaltenden Polydimethylsiloxanen und SiH-haltigen Dimethylpolysiloxanen, enthalten.

Gegenstand der Erfindung ist auch die Verwendung dieser verlaufmittelhaltigen Reaktivsysteme zur ein-oder besonders beidseitigen Reaktivbeschichtung von textilen Substraten oder zur Herstellung von oberflächenstrukturierten, flächigen Gebilden, insbesondere Veloursleder, über Matrizenabformungen.

EP 0 107 838 A2

BAYER AKTIENGESELLSCHAFT 5090 Leverkusen, Bayerwerk

Zentralbereich
Patente, Marken und Lizenzen OER/bc/c

# Verlaufmittelhaltige Polyurethan-High-Solid-Reaktivbeschichtungssysteme und ihre Verwendung zur Reaktivbeschichtung

Gegenstand der Erfindung sind High-Solid-Polyurethan-Reaktivbeschichtungssysteme aus blockierten NCO-Prepolymeren, Polyaminen und gegebenenfalls Lösungsmitteln, welche eine bestimmte Verlaufmittelkombination aus 1 bis 10 Gew.-% Poly(meth)acrylsäureestern und gegebenenfalls weiteren Copolymeren und 0,1 bis 2 Gew.-% Silikonen, insbesondere Polydimethylsiloxanen und/oder Polyalkylenoxid-polydimethylsiloxan-Copolymeren und/oder 0,1 bis 4 Gew.-% Poly(meth)acrylsäure-(hydroxy)-alkylester-Pfropfpolymeren auf Silikonen, insbesondere hergestellt durch Pfropfung entsprechender Monomerer auf Gemische von Vinylreste enthaltenden Polydimethylsiloxanen und SiH-haltigen Dimethylpolysiloxanen, enthalten.

Gegenstand der Erfindung ist auch die Verwendung dieser verlaufmittelhaltigen Reaktivsysteme zur ein- oder besonders beidseitigen Reaktivbeschichtung von textilen Substraten oder zur Herstellung von oberflächenstrukturierten, flächigen Gebilden, insbesondere Veloursleder, über Matrizenabformungen.

High-Solid-PU-Reaktivsysteme aus blockierten NCO-Prepolymeren, die mit vorzugsweise aliphatischen und/oder cycloaliphatischen Polyaminen im Beschichtungsprozeß unter Austritt des Blockierungsmittels beim Erwärmen zu Polyurethanharnstoffen umgesetzt werden, sind bekannt. Die Herstellung solcher Systeme und das Beschichten im Transfer- und Direktstreichverfahren auf textilen Substraten wird z.B. in der DE-A 2 902 090 (EP-A 13 890) beschrieben, wobei in den Beschichtungssystemen auch Verlaufshilfsmittel wie Polydimethylsiloxane oder Polyoxyalkylenpolydimethylsiloxan-Copolymere mitverwendet werden können.

Die bei der Direktbeschichtung mit blockierten High-Solid-PU-Reaktivsystemen auf textilen Substraten wie Geweben, Gewirken und Vliesen aus unterschiedlichsten Fasermaterialien, besonders bei zweiseitiger Beschichtung auftretenden Schwierigkeiten wie Blasen, Lunker und Verlaufstörungen, werden nach dem erfindungsgemäßen Verfahren vermieden.

Das erfindungsgemäße Verfahren zur ein- und besonders beidseitigen Beschichtung von textilen Substraten oder zur Matrizenabformung mit blockierten High-Solid-NCO-Prepolymeren unter Vernetzung dieser Reaktivsysteme mit Polyaminen ist gekennzeichnet durch den gleichzeitigen Zusatz von Vinylpolymeren und Polysiloxanen und/oder Vinylpfropfpolymeren auf der Grundlage von

Polysiloxanen als Verlaufs- und Homogenisierungsmittel.

Der durch diese kombinierten Zusätze bewirkte Effekt einer blasen- und lunkerfreien Beschichtung, besonders bei beidseitiger Beschichtung mit High-Solid-PU-Reaktivsystemen, war überraschend und durch keinerlei Erfahrung oder Literaturhinweise naheliegend. Das günstige Verlaufsverhalten der High-Solid-PU-Reaktivsysteme ist auch vorteilhaft bei der Beschichtung von Matrizen, z.B. zur Veloursleder-Herstellung entsprechend DBP 30 04 327.

Die erfindungsgemäßen Bestandteile der Verlaufshilfsmittel sind

A) Vinylpolymere, insbesondere Ester von Polyacryl- und/oder Polymethacrylsäuren mit geradkettigen oder verzweigten oder cyclischen Alkoholen, wobei als Veresterungskomponente vorzugsweise $C_1$-$C_{18}$-Alkohole verwendet werden. Die Vinylpolymeren können auch Mischpolymerisate aus Acrylsäure- und/oder Methacrylsäureestern und Comonomeren wie Acrylsäure, Methacrylsäure und deren Amide, Vinylacetat, Styrol, Acrylnitril und anderen Vinylverbindungen sein. Die Comonomeren neben Acryl- und/oder Methacrylsäureestern sind dabei in untergeordneten Mengen, z.B. weniger als 40 %, bevorzugt weniger als 20 %, enthalten.

Die Polyacryl- und/oder Polymethacrylsäureester liegen im allgemeinen als 10 bis 70 %ige Lösungen, insbesondere als 30 bis 50 %ige Lösungen, vor.

Als Lösemittel eignen sich Benzinfraktionen, Ester der Essigsäure, Propionsäure, Buttersäure (z.B. der Essigsäureethylester, Essigsäurebutylester, Ethylenglykolmonomethyletheracetat, Ethylenglykolmonoethyletheracetat) oder Ketone wie Methylethylketon, Diethylketon, Cyclohexanon oder Methylcyclohexanon.

Bei den als Komponente B) zu verwendenden flüssigen Polysiloxanen (Silikonen) handelt es sich um Polyalkyl- und/oder Polyphenyl-siloxane, insbesondere um Polydimethylsiloxane oder auch um Polyoxyalkylenpolydimethylsiloxan-Copolymere ("Polyethersilikone").

Die Viskosität dieser Polysiloxane liegt im verdünnten Zustand zwischen 100 und 50 000 mPa.s/25°C, besonders zwischen 500 und 5000 mPa.s.

Die Polymethylsiloxane bzw. Polymethylphenylsiloxane sind bekannte Verbindungen und werden beispielsweise in der Firmenschrift Baysilon-Öle-M, Polymere Dimethylpolysiloxane, Bayer AG, Sparte AC, Best.-Nr. AC 12 209 vom 1.2.1980, bzw. unter der Bezeichnung Baysilon-Öle-P, Polymere Methylphenylsiloxane, Best.-Nr. AC 12 023, Ausgabe 2/80, beschrieben.

Die erfindungsgemäß zur Anwendung kommenden "Polyethersilikone" stellen lineare, bevorzugt aber verzweigte oder kammartig aufgebaute Polyoxyalkylen-poly(di)alkylsiloxan-Copolymere, vorzugsweise Polyoxyalkylen-dimethylsiloxan-Copolymere dar, die im Molekül sowohl einen hydrophilen (Polyether-) wie

hydrophoben (Siloxan-) Teil enthalten. Der Polyoxyalkylenetheranteil beträgt dabei 20 bis 90 Gew.-%, vorzugsweise 40 bis 87,5 Gew.-%, entsprechend der Silikonanteil 80 bis 10, bevorzugt 60 bis 12,5 Gew.-%.

Der Polyoxyalkylenether-Teil enthält dabei mindestens 20 bis 80 Gew.-%, vorzugsweise 40 bis 70 Gew.-%, an Oxyethylengruppen, die anderen Oxyalkylenreste können aus Oxyalkylengruppen mit 3 bis 10 C-Atomen, vorzugsweise Oxypropylen- oder Oxybutylenresten bestehen; ganz besonders bevorzugter Rest ist jedoch der Oxypropylenrest $-O-CH_2-\underset{CH_3}{\underset{|}{CH}}-$ .

Die Kettenlängen der Polyoxyalkylensegmente im Polyethersilikon liegen dabei bevorzugt bei jeweils einer Molmasse $\geq$ 400 pro Polyoxyalkylenkette. Die Oxyalkylensegmente können rein segmentartig aus Oxyethylen- und Oxypropylensegmenten aufgebaut sein oder können (weniger bevorzugt) kürzere Mischsegmente darstellen. Die Enden einer Polyetherkette können durch einen monofunktionellen Rest, z.B. den Butoxyrest oder Methoxyethoxyrest, verschlossen sein.

Der Poly(di)alkylsiloxan-Teil der "Polyether-Silikone" kann aus z.B. (Di)methyl-siloxan-, (Di)ethylsiloxan-, (Di)amylsiloxan- und anderen (Di)alkylsiloxanresten bestehen, bevorzugt sind Poly(di)methylsiloxanreste als überwiegende Glieder der Siloxankette.

Ein Teil der Dialkylsiloxanreste kann durch

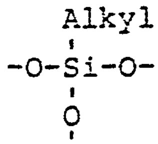 ersetzt werden, z.B. bei den (bevorzugten) trifunktionellen Silikonresten als

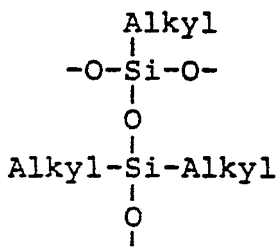 -Rest,

oder bei organofunktionellen Resten durch einen

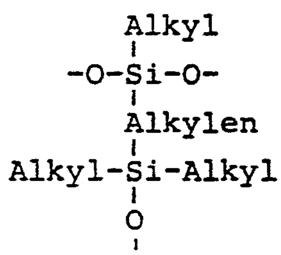 -Rest,

oder auch einen

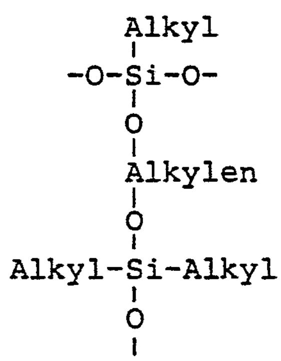 -Rest,

Derartige verzweigende oder modifizierende (z.B. organofunktionelle Verknüpfungen ergebende) Reste sind in der Variation der Silikonchemie üblich, ebenso sind die Endgruppen zumeist die

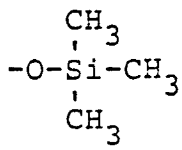 -Gruppe.

Eine Berücksichtigung solcher modifizierender Gruppen wird durch die Formulierung "(Di)alkylsiloxan"-Gruppe angedeutet.

Entsprechende Aufbaureaktionen zu solchen Polyethersilikonen werden in dem Buch: Chemie und Technik der Silikone, W. Noll, Verlag Chemie, Weinheim, 2. Auflage, 1968, Seiten 321-323 beschrieben. Beispiele für kammartig mit Polyethersegmenten modifizierte Polyethersilikone (V) oder für endständig mit Polyethersegmenten modifizierte Polyethersilikone verzweigter Struktur (VI) sind:

<u>Kammartig modifizierte Silikone (V):</u>

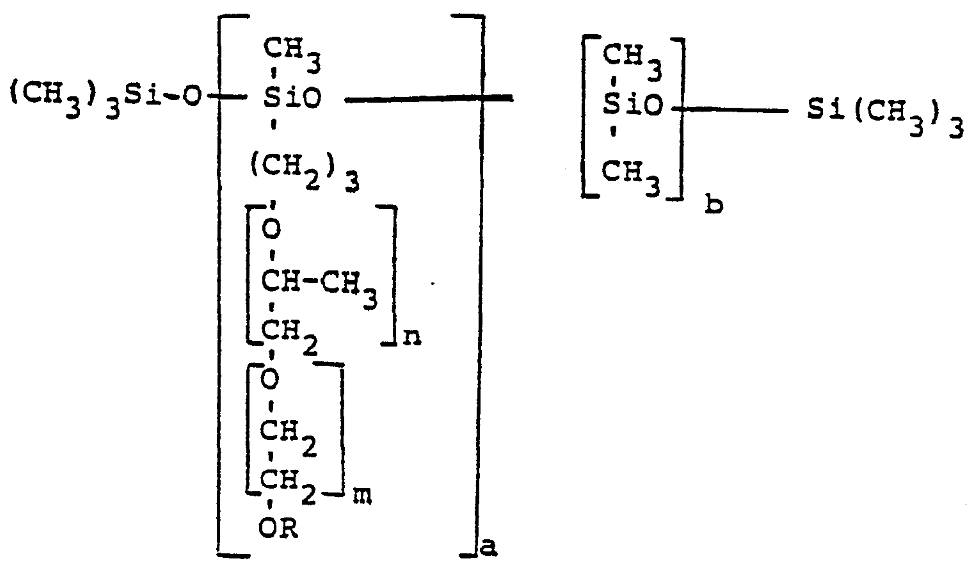

(wobei a) und b) ganze Zahlen darstellen und n und m ganze Zahlen darstellen, so daß der Anteil der Oxyalkylenethersegmente 20 bis 90 Gew.-% beträgt);

oder endständig modifizierte Silikone (VI):

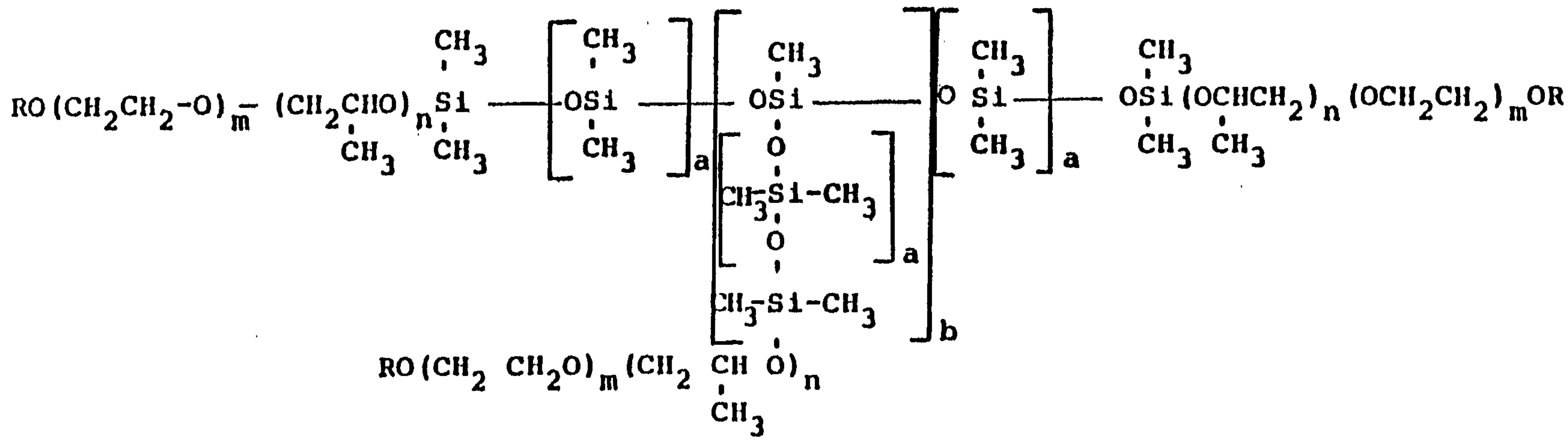

wobei a) und b) sowie m) und n) ganze Zahlen darstellen und solchen Werten entsprechen, daß (im Mittel) die angegebenen Oxyalkylenether- und Dimethylsiloxan-Gehalte erreicht werden und die Anteile der Oxyethylenethersegmente im Bereich der angegebenen Werte liegen.

Derartige Verbindungen werden in der Firmenschrift "Goldschmidt informiert", Nr. 24 (3/1973) der Fa. Goldschmidt-AG-Essen auf S. 3 angeführt, wo auch Literaturstellen zur Herstellung solcher Polyethersilixane und deren Eigenschaften zitiert sind.

Die Herstellung und die Strukturen solcher Polyethersiloxancopolymerer sind beispielsweise in folgenden Patentschriften wiedergegeben: DE-B 1 444 316 (US-PS 3 562 786), DE-B 1 040 251 (US-PS 2 834 748), DE-B 1 233 133, US-PS 2 917 480, US-PS 3 629 308, GB-PS 1 006 784, DE-B 1 545 110 und EP-A 25 822.

Die Molekulargewichte der Polyethersilikone liegen im allgemeinen zwischen 3000 und 50 000, vorzugsweise 6000 und 20 000.

Diese Silikone B) können den High-Solid-PU-Reaktiv-Streichpasten unverdünnt oder verdünnt zugesetzt werden. Als Verdünnungs- bzw. Lösemittel eignen sich z.B. aromatische Kohlenwasserstoffe, wie Toluol, Ester wie Ethylacetat, Methyl- oder Ethylglykolacetat, Ketone wie Aceton oder Methylethylketon. Zum Lösen der Polyethersilikone kommen auch Alkohole, wäßrige Alkohole und Wasser in Frage. Die Konzentrationen an B) liegen dabei zwischen 20 und 100 %.

Die erfindungsgemäß als C) einzusetzenden Vinylpfropfpolymeren auf Silikonen werden durch Pfropfpolymerisation von Acrylsäure- und/oder Methacrylsäureestern, z.B. Butylacrylat oder Methylacrylsäuremethylester, auf Silikone erhalten, insbesondere durch Pfropfung auf Gemische auf Vinylreste enthaltenden Dimethylpolysiloxanen und SiH-haltigen Dimethylpolysiloxanen. Der Anteil des aufgepfropften Polyacrylats im Pfropfpolymeren liegt im allgemeinen zwischen 5 und 50 %, insbesondere zwischen 20 bis 40 Gew.-%. Die Pfropfpolymeren C) werden vorteilhaft unverdünnt in die High-Solid-PU-Reaktiv-Streichpasten eingearbeitet. Sie können aber auch mit Lösemitteln wie Methylglykolacetat verdünnt oder in Wasser dispergiert werden, wobei die Konzentration bei 20 bis 100 Gew.-% liegt.

Es ist bevorzugt, entweder eine Kombination von A) und B) oder die Kombinations-Vinylpfropfpolymeren C) für sich alleine zu benutzen. Es ist ferner möglich, eine Kombination aus A + B + C einzusetzen. Es ist jedoch auch möglich, das Vinylpfropfpolymere C) zusammen mit entweder den Vinylcopolymeren A) oder zusammen mit den Silikonen B) einzusetzen, und den Effekt der Additive in die gewünschte Richtung zu modifizieren.

Die Aufwandmenge der Verlaufhilfsmittel beträgt - als Feststoff bezogen auf die High-Solid-PUR-Reaktiv-Streichpasten - 1 bis 10 Gew.-%, bevorzugt 2 bis 5 Gew.-%, an A); 0,1 bis 2,5 Gew.-%, bevorzugt 0,2 bis 1,0 Gew.-%, an B) und/oder 0,1 bis 4 Gew.-%, bevorzugt 0,2 bis 2,0 Gew.-%, Pfropfpolymere auf Basis von Silikonen C). Die Gesamtmenge an Verlaufshilfsmitteln liegt dabei vorzugsweise bei max. 8 Gew.-%.

Gegenstand der Erfindung sind somit High-Solid-Polyurethan-Reaktivbeschichtungssysteme aus blockierten NCO-Prepolymeren, Polyaminen, üblichen Zusatzstoffen, Verlaufhilfsmitteln und gegebenenfalls Lösungsmitteln, wobei die Beschichtungssysteme eine bestimmte Verlaufmittelkombination aus

A) 1 bis 10 Gew.-% Vinylpolymeren und Copolymeren auf Basis von Poly(meth)acrylsäureestern und gegebenenfalls deren Copolymeren und
B) 0,1 bis 2 Gew.-% Polysiloxanen und/oder Polyalkylenoxid-polysiloxan-Copolymeren,

und/oder

C) 0,1 bis 4 Gew.-% Poly(meth)acrylsäure-(hydroxy)-alkyl-ester-Pfropfpolymeren auf Silikone

enthalten.

Gegenstand der Erfindung ist auch die Verwendung dieser verlaufmittelhaltigen Reaktivsysteme zur ein- oder besonders beidseitigen Reaktivbeschichtung von textilen Substraten oder zur Herstellung von oberflächenstrukturierten, flächigen Gebilden, insbesondere Veloursleder, über Matrizenabformungen.

Die Reaktivbeschichtung erfolgt generell durch Umsetzung von blockierte NCO-Gruppen aufweisenden NCO-Prepolymeren und wenig flüchtigen aliphatischen und/oder cycloaliphatischen Diaminen, vorzugsweise alkylsubstituierten Dicyclohexylmethan-diaminen. Entsprechende Verfahren werden beispielsweise in den DE-A 28 14 079, 28 14 173, 29 020 90, 31 20 596 und dem DBP 30 04 327 beschrieben und es wird hierauf Bezug genommen.

Die NCO-Prepolymeren sind dabei Umsetzungsprodukte von höhermolekularen, zwei- bis vierwertigen, vorzugsweise zwei- bis dreiwertigen, Polyhydroxylverbindungen mit einem Molekulargewicht von 500 bis 10 000, vorzugsweise 1000 bis 6000, vorzugsweise die üblicherweise für die Beschichtung von mit Polyurethansystemen bekannten Ausgangsstoffe, z.B. 2- bis 4-wertige Polyether wie Polytetramethylenether, vorzugsweise aber Polyoxypropylenpolyether, die auch Polyoxyethylen-Einheiten in block-, misch- oder endständiger Form in Mengen

bis 80 % aller Oxyalkyleneinheiten enthalten können, sowie unterhalb von 60°C schmelzende Polyester sowie die sonst üblicherweise verwendeten Polythioether, Polycarbonate, Polyacetale oder Lactonpolyester, ihre beliebigen Mischungen oder auch Mischkondensationsprodukte mit Ether-, Ester-, Amid-, Carbonat- oder Acetalgruppierungen.

Als höhermolekulare Polyhydroxylverbindungen können Verbindungen, gegebenenfalls in Mischung mit unmodifizierten Polyolen, eingesetzt werden, welche hochmolekulare Polyaddukte bzw. Polykondensate oder Vinylpolymerisate in feindisperser oder auch gelöster Form enthalten. Es sind dies besonders etwa 8 bis 40 Gew.-% Polyadditionsprodukte aus Diisocyanaten und Diolen, bevorzugt aber Diaminen (einschließlich Hydrazin bzw. Dihydrazid-Verbindungen) enthaltende Polyether, Polyester oder Polycarbonate. Auch etwa 8 bis 40 Gew.-% Polymerisate enthaltende (z.B. durch Pfropfpolymerisation von Acrylnitril und Styrol) Polyether, Polyester oder Polycarbonate können verwendet werden.

Bei der Herstellung der NCO-Polymerisate können gegebenenfalls auch niedermolekulare Polyole mit einem Molekulargewicht von 62 bis etwa 399, vorzugsweise 62 bis 250, mitverwendet werden, wie sie als Kettenverlängerungsmittel an sich bekannt sind. Bevorzugt sind erfindungsgemäß in diesem Zusammenhang Butandiol-1,4 oder -2,3 oder -1,3, Diethylenglykol, Di-2-hydroxyethyl-sulfid, Dianhydrosorbit oder Trimethylolpropan. Geeignete höher- und

niedermolekulare Polyhydroxylverbindungen, soweit sie in diesen Molekulargewichtsbereich fallen, werden ausführlich in der DE-A 28 54 834 genannt.

Als Polyisocyanate können in in DE-A 2 854 834 genannten aliphatischen, cycloaliphatischen und aromatischen Polyisocyanate Verwendung finden, doch werden vorzugsweise aromatische Polyisocyanate eingesetzt. Erfindungsgemäß bevorzugt sind die Diphenylmethandiisocyanate in Form ihrer 4,4'-, 2,4'- und/oder 2,2'-Isomeren oder deren Mischungen, sowie die isomeren Toluylendiisocyanate und insbesondere Gemische dieser Isocyanate. Werden cycloaliphatische Diisocyanate verwendet, so sind dies besonders die Dicyclohexylalkandiisocyanate und das Isophorondiisocyanat.

Die Herstellung der NCO-Polymerisate erfolgt in an sich bekannter Weise, indem man die genannten Polyhydroxylverbindungen mit überschüssigen Diisocyanaten, vorzugsweise im NCO/OH-Verhältnis von 1,5:1 bis 6,0:1, vorzugsweise von 1,7:1 bis 2,5:1, umsetzt. Der NCO-Gehalt der einzusetzenden (blockierten) NCO-Prepolymeren liegt zwischen etwa 1,8 und 8 %, vorzugsweise 2,0 bis 6 % und besonders bevorzugt 2,1 bis 5 Gew.-% NCO.

Als Blockierungsmittel für die NCO-Prepolymeren sind Phenole, Malonester, Acetessigester, Caprolactam und ähnliche, für Blockierungsreaktionen bekannte Verbindungen geeignet, bevorzugt sind jedoch $C_2$-$C_8$-Alkanonoxime, ganz besonders bevorzugt das Butanonoxim.

Die Blockierung erfolgt, indem man das NCO-Vorpolymerisat mit etwa stöchiometrischen Mengen des Blockierungsmittels, ganz besonders bevorzugt mit Butanonoxim, bis zum Verschwinden der NCO-Gruppe umsetzt. Es können auch solche blockierten NCO-Prepolymere eingesetzt werden, bei denen nicht alle NCO-Gruppen blockiert sind, sondern noch 1 bis 25 % freie NCO-Gruppen vorliegen.

Die blockierten NCO-Vorpolymerisate können zwecks Einstellung der optimalen Verarbeitungsviskosität von etwa 15 000 bis 40 000 mPa.s bei 20°C mit bis zu 50 Gew.-%, vorzugsweise 15 Gew.-%, besonders bevorzugt mit bis zu 10 Gew.-%, bezogen auf das blockierte NCO-Vorpolymerisat, an organischen Lösungsmitteln gemischt werden. Beispielsweise können Isopropanol, Ethylenglykolmonomethylether sowie deren Essigsäureester, Methylethylketon, Cyclohexanon, Butylacetat und DMF verwendet werden.

Den Streichpasten können ferner übliche Zusätze wie Farbstoffe und Pigmente, Verdickungsmittel wie Kieselsäure, Kreide, Talkum, Kaolin, Glasmehl oder Kurzfasern, UV-Absorber, Antioxidantien, Licht- oder Thermostabilisatoren, Stabilisatoren gegen Verfärbungen durch Abgase wie tert.-Amin-haltige Stabilisatoren oder Tetraalkylpiperidinderivate, gegebenenfalls auch übliche Polyurethankatalysatoren, zugesetzt werden.

Als Vernetzerkomponente für die blockierten NCO-Vorpolymerisate dienen wenig flüchtige aliphatische und/ oder cycloaliphatische Polyamine, vorzugsweise bei

Raumtemperatur flüssige, (cyclo)aliphatische Diamine mit geringem Dampfdruck, vorzugsweise einem geringeren Dampfdruck als Hexandiamin-1,6. Besonders bevorzugt sind Dicyclohexylmethan-diamine, besonders alkylsubstituierte Diaminodicyclohexylmethane, wie z.B. 4,4'-Diamino-3,3'-dimethyl-dicyclohexylmethan, 4,4'-Diamino-3,3'-diethyldicyclohexylmethan, 4,4'-Diamino-3,3'-diisopropyl-dicyclohexylmethan oder unsymmetrisch alkylsubstituierte 4,4'-Diaminodi-, -tri- oder -tetra-alkylcyclohexylmethane, wie z.B. Produktgemische aus 3,5-Diethyl-3'5'-diisopropyl-dicyclohexylmethan, 3,5-3',5'-Tetraethyl-4,4'-diaminodicyclohexylmethan und 3,5,3',5'-Tetraisopropyl-4,4'-diaminodicyclohexylmethan entsprechend DE-OS 29 20 501 oder 3,5,3'-Trimethyldodecahydro-diphenyl-4,4'-diamin. Es können auch aliphatische Diamine oder bevorzugt anteilweise höherfunktionelle Polyamine verwendet werden, z.B. 1,12-Diaminododecan oder 1,5,11-Triaminoundecan. Ganz besonders bevorzugt ist 4,4'-Diamino-3,3'-dimethyl-dicyclohexylmethan. Besonders bevorzugte Diamine und Reaktivbeschichtungsmassen werden in der Deutschen Patentschrift 29 02 090/EP-A 13 890 beschrieben.

Die Vermischung der blockierten NCO-Vorpolymerisate mit dem Polyamin-Vernetzer erfolgt im allgemeinen etwa im Verhältnis der Äquivalentgewichte dieser Komponenten, obwohl auch ein Abweichen vom stöchiometrischen Verhältnis möglich ist, so daß das Äquivalentverhältnis von blockiertem NCO zu $NH_2$ erfindungsgemäß im allgemeinen zwischen 1,30:1 und 0,95:1, bevorzugt 1,25:1 bis 0,97:1, ganz besonders bevorzugt 1,10:1

bis 0,98:1 liegt. Es können also NCO-Überschüsse verwendet werden, überschüssige Aminogruppen sind nur in engeren Grenzen tolerabel, um nicht die Eigenschaften zu verschlechtern.

Die textilen Substrate, z.B. Gewebe aus Polyester-, Polyamid-, Glasfasern oder Naturfasern können vor der Direktbeschichtung mit High-Solid-PUR-Reaktivsystemen mit handelsüblichen 2- oder 1-Komponenten-Polyurethanen aus Lösung oder Dispersionen oder mit PVC-Zubereitungen grundiert werden. Die Beschichtung mit der erfindungsgemäßen Reaktivbeschichtungsmasse erfolgt nach an sich bekannten Durchführungsformen mittels üblicher Beschichtungsapparaturen oder Vorrichtungen. Eine erfindungsgemäß besonders wichtige Durchführungsform, wo das Verfahren auch besonders wichtige Effekte zeigt, ist die zweiseitige Beschichtung von textilen Substraten, welche sich hier blasen- und lunkerfrei auch bei hohen Auflagenmengen erzielen läßt. Die Auflagemengen in dieser bevorzugten Durchführungsform liegen dabei $\geq$ 100 g/$m^2$ auf jeder Seite, bevorzugt zwischen 100 und 1000 g/$m^2$ auf jeder Seite.

## Beispiele

### Herstellung der blockierten NCO-Prepolymeren

### High-Solid-Prepolymer A:

Es werden 4000 g eines Hydroxylpolyethers auf Basis von Trimethylolpropan und Propylenoxid mit Molekulargewicht 6000 sowie 275 g eines Hydroxylpolyethers (Molekulargewicht 550) auf Basis von Bisphenol A und Propylenoxid zusammen mit 375 g 4,4'-Diisocyanato-diphenylmethan sowie 261 g 2,4-Diisocyanato-toluol bei 80 bis 90°C umgesetzt, bis der berechnete NCO-Gehalt von 2,56 % knapp unterschritten ist. Danach rührt man in diese Mischung bei 60 bis 70°C 261 g Butanonoxim ein. Nach ca. 20 Minuten ist kein NCO IR-spektroskopisch mehr nachweisbar. Das blockierte NCO-Vorpolymerisat, eine klare, farblose Flüssigkeit mit einer Viskosität von ca. 50 000 mPa.s bei Raumtemperatur, hat einen bestimmbaren, latenten NCO-Gehalt von 2,34 Gew.-% und somit ein NCO-Äquivalent von 1800 g.

### High-Solid-Prepolymer B:

Als Hydroxylkomponenten werden 2000 g eines Polyethers auf Basis von Trimethylolpropan und Propylenoxid mit Molekulargewicht 6000, 1000 g eines linearen Polyethers auf Basis von Propylenglykol und Propylenoxid mit Molekulargewicht 1000, 1450 g eines linearen Polyesters (Molekulargewicht 1700) auf Basis von Hexandiol-1,6, Neopentylglykol (65:35) und Adipinsäure sowie 22,5 g

Butandiol-1,4 mit 1125 g 4,4'-Diisocyanato-diphenylmethan und 174 g 2,4-Diisocyanato-toluol ca. 3 Stunden bei 80 bis 90°C umgesetzt, bis der berechnete NCO-Gehalt von 4,26 % knapp unterschritten ist.

Anschließend werden bei 60 bis 70°C 496 g Butanonoxim sowie 696 g Ethylenglykolmonomethyletheracetat rasch eingerührt. Nach 20 Minuten ist kein NCO mehr IR-spektroskopisch nachweisbar. Das blockierte NCO-Vorpolymerisat, eine farblose, klare Flüssigkeit mit einer Viskosität von ca. 40 000 mPa.s bei Raumtemperatur, hat einen bestimmbaren, latenten NCO-Gehalt von 3,3 Gew.-% und somit ein NCO-Äquivalent von 12 800 g.

High-Solid-Prepolymer C:

1000 Gew.-Teile eines linearen Hydroxylpolyester-Polycarbonates (Molekulargewicht 2000), hergestellt aus dem Esterglykol von ε-Caprolacton und Hexandiol-1,6 mit Diphenylcarbonat gemäß der DAS 1 770 245, werden mit 262 Gew.-Teilen 4,4'-Diisocyanato-dicyclohexylmethan etwa 2 Stunden bei 115°C umgesetzt, bis der ermittelte NCO-Gehalt bei ca. 2,9 % (berechnet sind 3,3 %) liegt. Unter Zugabe von 338 Gew.-Teilen Ethylenglykolmonomethyletheracetat wird das NCO-Vorpolymerisat auf 70 bis 80°C abgekühlt. Bei dieser Temperatur werden rasch 87 Gew.-Teile Butanonoxim hinzugefügt. Nach Abklingen der leicht exothermen Reaktion, etwa 10 bis 20 Minuten nach der Oxim-Zugabe, ist IR-spektroskopisch kein NCO mehr nachweisbar. Das blockierte NCO-Vorpolymerisat, 80 %ig gelöst, stellt eine farblose, klare Flüssigkeit mit

einer Viskosität von 40 000 mPa.s bei 20°C dar und hat einen bestimmbaren, latenten NCO-Gehalt von 2,4 % und somit ein NCO-Äquivalentgewicht von 1750.

Beispiel 1

500 g High-Solid-Prepolymer A (NCO-Gehalt 2,34 %), 500 g High-Solid-Prepolymer B (NCO-Gehalt 3,3 %) wurden gemischt. Zu der Mischung gibt man 50 g einer 30 %igen Lösung eines Polymethacrylsäurebutylesters in Waschbenzin, 5,0 g eines Polydimethylsiloxans der Viskosität 20 000 mPa.s/25°C. 100 g Titandioxid-Trockenpigment und 78,0 g 3,3'-Dimethyl-4,4'-diamino-dicyclo-hexylamin als Vernetzer. Nach Homogenisierung, gegebenenfalls durch Abmahlen auf einem Walzenstuhl, liegt die streichfertige High-Solid-PUR-Reaktivmasse vor.

Auf Polyestergewebe 1100 dtex von ca. 200 g/$m^2$ Warengewicht wird auf einer Beschichtungsmaschine mittels Walzenrakel bei 0,3 mm Spaltbreite die oben beschriebene Streichpaste aufgebracht. Die Vernetzung erfolgt bei 150 bis 160°C, Verweilzeit 2 Minuten, Trockenauflage 230 g/$m^2$. Auf die Unterseite der beschichteten Gewebebahn wird mit 0,1 mm Rakelspalt ein erster Strich aufgebracht, der unter den obengenannten Bedingungen zur Vernetzung gebracht wird. Auflage 80 g/$m^2$. Die Schicht ist homogen, ohne Blasen und Lunker. Unter analogen Bedingungen wird auf die Unterseite ein zweiter Strich bei einem Rakelspalt von ca. 0,2 mm aufgebracht, Auflage nach erfolgter Reaktion 180 g/$m^2$, Gesamtauflage

auf der Unterseite also 260 g/$m^2$. Der zweite Strich auf der Unterseite ist fest mit dem ersten verbunden und ist wie dieser frei von Lunkern, Löchern oder Blasen.

Ein Vergleichsversuch mit einer Streichpaste gemäß Beispiel 1, aber ohne Zusatz der 30 %igen Lösung des Polymethacrylsäurebutylesters und des Polydimethylsiloxans in sonst analoger Weise ausgeführt, liefert eine Beschichtung mit beidseitig schlechtem Verlauf, starker Krater-, Loch- und Inselbildung auf der Unterseite (2. Seite) des Artikels. Auch ein alleiniger Zusatz von Polydimethylsiloxan ergibt noch Beschichtungen mit mäßigem Verlauf und mechanischen Fehlern.

Beispiel 2

300 g High-Solid-Prepolymer A (NCO-Gehalt 2,34 %), 700 g High-Solid-Prepolymer B (NCO-Gehalt 3,3 %) werden gemischt. Zu dieser Mischung gibt man 100 g einer 50 %igen Lösung eines Polyacrylsäure-ethylesters in Ethylacetat/ Methylglykolacetat (3:2) und 20 g eines oxethylierten Polydimethylsiloxans der Viskosität 1000 mPa.s/25°C. Als Pigment werden 80 g rotbraunes Eisenoxid eingearbeitet; 85,0 g 3,3'-Dimethyl-4,4'-diamino-dicyclohexylmethan werden als Vernetzer eingerührt.

Ein Nylon-Gewebe von ca. 120 g/$m^2$ Warengewicht wird mit dieser Streichpaste beidseitig beschichtet.

| | |
|---|---|
| Oberseite: | 1 Strich, ca. 120 $g/m^2$ Trockenauflage |
| Unterseite: | 1 Strich, ca. 100 $g/m^2$ Trockenauflage |
| Vernetzungstemp.: | 140-150-160°C |
| Verweilzeit: | 2 Minuten |

Ober- wie Unterseite der Beschichtung weisen homogenen Verlauf auf, sind frei von Kratern und Inseln.

Beispiel 3

1000 g High-Solid-Prepolymer C (NCO-Gehalt 2,4 %), 40 g eines Pfropfpolymeren aus Butylacrylat auf Dimethylpolysiloxan (22 % Butylacrylat gepfropft auf ein Gemisch aus 25 % Si-Vinylhaltiges Dimethyl-polysiloxan und 53 % SiH-haltiges Dimethylpolysiloxan), 50 g Al-Pulver, 80 g Kreide und 68,0 g 3,3'-Dimethyl-4,4'-diamino-dicyclohexyl-methan werden zu einer Streichpaste homogenisiert.

Ein Glasgewebe von 300 $g/m^2$ Warengewicht wird mit der Streichpaste gemäß Beispiel 3 beidseitig beschichtet.

| | |
|---|---|
| Oberseite: | 2 Striche: |
| | 1. Strich ca. 100 $g/m^2$ Aulage |
| | 2. Strich ca. 200 $g/m^2$ Auflage |
| Unterseite: | 1 Strich ca. 150 $g/m^2$ Auflage |
| Vernetzungstemp.: | 140-150-160°C |
| Verweilzeit: | 2 Minuten |

Ober- und Unterseite der Beschichtung zeigen keine Verlaufstörungen. Die Oberfläche der Beschichtung ist matt-silbergrau, ohne Krater und Lunker.

Patentansprüche

1) High-Solid-Polyurethan-Reaktivbeschichtungssysteme aus blockierten NCO-Prepolymeren, Polyaminen, üblichen Zusatzstoffen, Verlaufshilfsmitteln und gegebenenfalls Lösungsmitteln, wobei die Beschichtungssysteme eine bestimmte Verlaufmittelkombination aus

A) 1 bis 10 Gew.-% Vinylpolymeren und Copolymeren auf Basis von Poly(meth)acrylsäureestern und gegebenenfalls deren Copolymeren und

B) 0,1 bis 2 Gew.-% Polysiloxanen und/oder Polyalkylenoxidpolysiloxan-Copolymeren,

und/oder

C) 0,1 bis 4 Gew.-% Poly(meth)acrylsäure-(hydroxy)-alkylester-Pfropfpolymeren auf Silikone,

enthalten.

2) High-Solid-Polyurethan-Reaktivbeschichtungssysteme nach Anspruch 1, wobei die Beschichtungssysteme eine bestimmte Verlaufmittelkombination aus

A) 2 bis 5 Gew.-% Vinylpolymeren und Copolymeren auf Basis von Poly(meth)acrylsäureestern und gegebenenfalls deren Copolymeren und

B) 0,2 bis 1,0 Gew.-% Polysiloxanen und/oder Polyalkylenoxidpolysiloxan-Copolymeren und/oder

C) 0,2 bis 2,0 Gew.-% Poly(meth)acrylsäure-(hydroxy)-alkylester-Pfropfpolymeren auf Silikonen enthalten.

3) High-Solid-Polyurethan-Reaktivbeschichtungssysteme nach den Ansprüchen 1 bis 2, wobei die Beschichtungssysteme eine Verlaufmittelkombination aus

A) Vinylpolymeren und Copolymeren auf Basis Poly-(meth)acrylsäure-estern und gegebenenfalls deren Copolymeren als 10 bis 70 %ige Lösungen und

B) Polysiloxanen und/oder Polyalkylenoxidpolysiloxan-Copolymeren als ≥ 20 Gew.-%ige Lösungen bzw. als Feststoff und/oder

C) Poly(meth)acrylsäure-(hydroxy)-alkylester-Pfropfpolymeren auf Silikonen in Form von ≥ 20 %igen Lösungen bzw. als Feststoff

enthalten.

4) High-Solid-Reaktiv-Beschichtungssysteme nach Ansprüchen 1 bis 3, wobei die Beschichtungssysteme eine Verlaufmittelkombination aus

A) 2 bis 5 Gew.-% Polymethacrylsäurebutylester und

B) 0,2 bis 1,0 Gew.-% Polydimethylsiloxan und/oder oxethyliertes Polydimethylsiloxan und/oder

C) 0,2 bis 2 Gew.-% Poly(meth)-acrylsäure-(hydroxy)-butyl ester-Pfropfpolymere auf Si-Vinyl-Dimethylpolysiloxane

enthalten.

5) Verwendung der verlaufmittelhaltigen Reaktivsysteme nach Ansprüchen 1 bis 4, zur ein- oder beidseitigen Reaktivbeschichtung von textilen Substraten oder zur Herstellung von oberflächenstrukturierten, flächigen Gebilden, insbesondere Veloursleder, über Matrizenabformungen.

6) Verwendung der verlaufmittelhaltigen Reaktivsysteme nach Ansprüchen 1 bis 5, zur beidseitigen Reaktivbeschichtung von textilen Substraten und Auflagen von mehr als 100 $g/m^2$ auf jeder Seite, bevorzugt 100 bis 1000 $g/m^2$.